# EUROPEAN PATENT APPLICATION

(11) **EP 0 895 022 A2**
(43) Date of publication of application: **03.02.1999**
(21) Application number: 98306027.8
(22) Date of filing: 29.07.1998
(51) Int. Cl.: F21V 19/00

(54) **Base for compact fluorescent lamp**

(30) Priority: 01.08.1997 HU 9701337
(71) Applicant: GENERAL ELECTRIC COMPANY, Schenectady, NY 12345 (US)
(72) Inventor: Wursching, Istvan, 1051 Budapest (HU); Fülöp, Attila, 1173 Budapest (HU); Orbán, Janos, 5900 Orosháza (HU); Ocsovai, Akos, 1037 Budapest (HU); Fülöp, Jozsef, 1148 Budapest (HU)
(74) Representative: Goode, Ian Roy

(57) **Abstract**

Base for compact fluorescent lamp which comprises a plastic cap (2) being a hollow body and holding a discharge tube (6) firmly. A plastic shell (3) is fixed to the plastic cap (2) and includes components for releasable mechanical and electrical connection between the lamp and a lampholder which is in an outside operating unit or in an assembly containing such an operating unit. The base (1) has metal parts that are embedded into the plastic shell (3) and are suitable for electrical connection to electrical contacts of the lampholder. The plastic shell (3) includes wall portions having surface elements suitable for positioning the lamp and provides releasable mechanical connection with corresponding surface elements of the lampholder. The wall portions border a hollow (30) being sunk into the base (1) and surrounding an inner space portion around a central axis (0). The plastic cap (2) and the plastic shell (3) have a common outer peripheral region including fitted surface portions being fixed (4) to each other. The plastic cap (2) and the plastic shell (3) are fixed to each other with at least one further fixing joint (5) in the inner space (10) of the base (1).

## Description

This invention relates to a base for compact fluorescent lamp, and more particularly, to a so-called inverted base construction in which the elements providing a releasable mechanical connection with a lampholder are sunk into the base.

An inverted base construction for compact fluorescent lamps is known from US Patent Specification No. 5,634,820. In this construction, an essentially prismatic protrusion providing mechanical positioning and a releasable joint is formed on the lampholder which is an accessory of the operating unit of the fluorescent lamp or an accessory of an electrical assembly consisting of the said operating unit and other construction units. A hollow with essentially rectangular cross-section accepting the protrusion of the lampholder is formed in the two-part base consisting of a plastic cap and a plastic shell, more exactly in the shell thereof. This solution permits to construct a base which is capable of satisfying the market requirement of reducing the overall length of a compact fluorescent lamp of a given wattage to the smallest possible value. It is an additional advantage that the inner space of the operating unit is larger. This additional space can be utilized for other purposes: for example, the electronic circuit controlling and supplying the compact fluorescent lamp can be placed in this space with more ease and also more favorably in respect of the distribution of heat.

At the same time, it is known from practice that the cap holding the discharge tube firmly and the shell provided with the elements ensuring the mechanical and electrical connection cannot generally be fixed together satisfactorily in the case of an inverted base structure. In the base construction according to US Patent Specification No. 5,634,820 and also in other base constructions, which have become known by public use, the cap and the shell are fixed to each other only along the outer periphery of the cap and the shell. Consequently, the axial force works along an unfavorably long arm when inserting the compact fluorescent lamp into a lampholder, and mainly when removing the lamp from it. This force also exerts a bending moment on the connection in addition to its shearing load. In some constructions in widespread use, the fixing connection between the cap and the shell is only provided by snapping a groove formed in the rim of the cap and a rib formed on the outer mantle surface of the shell into each other. These connecting parts are closely fitted to each other and at least one of them is supposed to be deformed resiliently. This fixing can withstand pulling and especially torsional loads only if the parts are made of expensive materials and with increased accuracy, both causing additional manufacturing costs. In the case of the known base constructions of this type, it is a problem to ensure a sufficient and continuously reliable bonding strength taking into account the tolerance range of parts made in a large volume and the need for reducing the quantity of material used.

From publication No. DE 195 38 174 A1, a base has become known in which the functions of the cap and the shell are shared. The surface elements for making the releasable connection between the base and the lampholder are in the cap, which has also the function of fixing and positioning the discharge tube, while only the construction elements for electrical connection are embedded into the shell. In the case of the lamp base according to the publication referred to, an opportunity is given for an additional fixing of the cap and the shell to each other in the inner space of the base. This construction, however, requires increased height dimensions of the base and the compact fluorescent lamp of this construction has not gained widespread use in practice.

The objective of the present invention is to create a base construction with a height determined by the dimensions of the discharge tube, and which construction permits the development of two part bases withstanding both pulling and torsional loads without significantly increasing manufacturing costs.

Another objective of the invention is to create a base construction with increased bonding strength by making use of parts with reduced wall thickness.

This objective is achieved by a base for compact fluorescent lamp which comprises a plastic cap being a hollow body and holding a discharge tube firmly. A plastic shell is fixed to the plastic cap and includes components for releasable mechanical and electrical connection between the lamp and a lampholder which is in an outside operating unit or in an assembly containing such an operating unit. The base has metal parts that are embedded into the plastic shell and are suitable for electrical connection to electrical contacts of the lampholder. The plastic shell includes wall portions having surface elements suitable for positioning the lamp and provides releasable mechanical connection with corresponding surface elements of the lampholder. The wall portions border a hollow being sunk into the base and surrounding an inner space portion around a central axis. The plastic cap and the plastic shell have a common outer peripheral region including fitted surface portions being fixed to each other. The plastic cap and the plastic shell are fixed to each other with at least one further fixing joint in the inner space of the base.

It is an outstanding advantage of the compact fluorescent lamp base according to the invention that, in addition to the fixing along the outer periphery thereof, it also uses a further fixing joint in the region of the greatest torsional moment and adjacent to the axis of the base where the mechanical, particularly pulling load appears in order to share the pulling and torsional-bending load between the two fixing joints. The solution according to the invention significantly increases the resistance of the base against pulling and torsional loads and enables the construction and use of material-saving plastic caps and shells with reduced wall thickness.

In the following, an example of an embodiment will be shown with reference to the figures of the drawing attached in order to describe the essential features of the present invention in detail.
In the drawing,
Fig. 1 shows an example of the compact fluorescent lamp base, in which the present invention is embodied, schematically in sectional view,
Fig. 2 is an example of the shell of the fluorescent lamp base shown in section along the plane II-II in Fig. 3,
Fig. 3 is the bottom view of the shell seen in Fig. 2 and
Fig. 4 is a semi-sectional view of the shell of the base shown in Figs. 2 and 3.

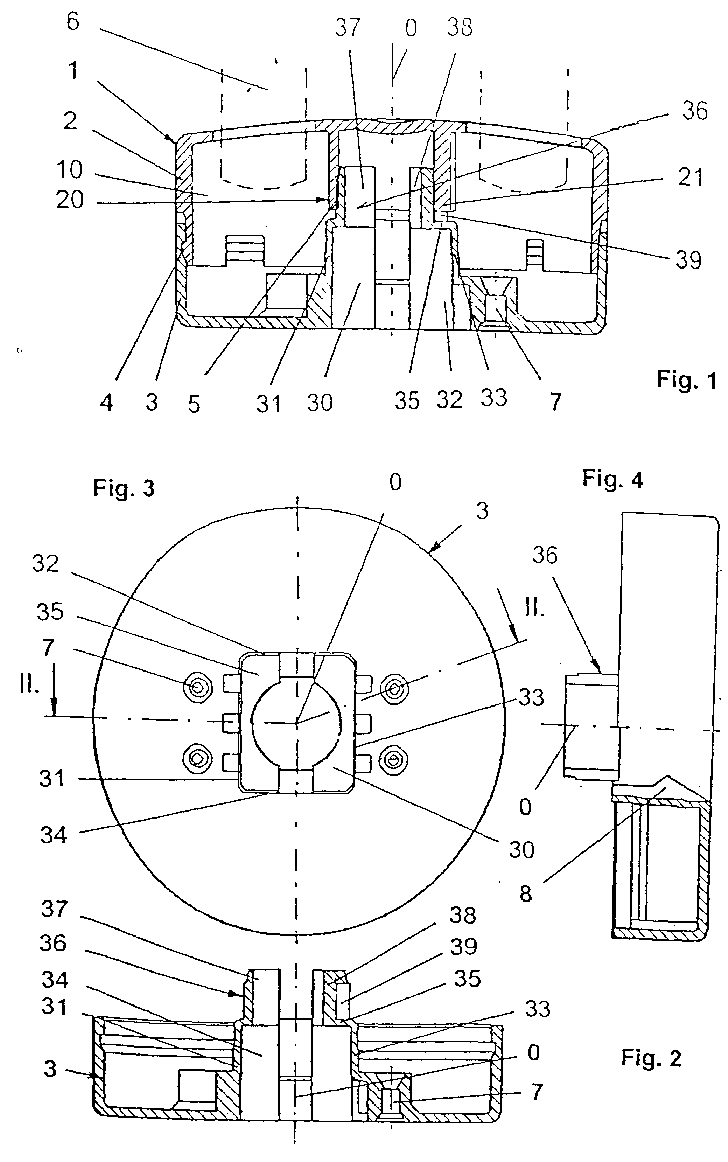

In Fig. 1 of the attached drawing, the base 1 of the compact fluorescent lamp, in which the invention is embodied, comprises a plastic cap 2, which has the shape of a body of rotation and provides for fixing the discharge tubes 6 (indicated in the drawing by its end protrusions with a dashed line only), and a plastic shell 3 including components responsible for a releasable mechanical and electrical connection between the compact fluorescent lamp and a lampholder (not shown). The lampholder can be formed in an outside operating unit of the compact fluorescent lamp or in an assembly containing such an operating unit. Metal parts, particularly metal pins (also not shown in the drawing for the sake of simplicity) are embedded into holes 7 of the shell 3 as electrical contact elements, which metal parts fit to the electrical contacts of the lampholder. Surface elements, which provide for a releasable mechanical connection ensuring positioning and replaceability of the compact fluorescent lamp, are formed in wall portions 32 and 34 bordering a hollow 30 with preferably rectangular cross-section. The hollow (30) is sunk into the base 1 and surrounds an inner space portion around a central axis 0 of the base 1. The surface elements (one of these is illustrated by a nose 8 made by two slant plane surfaces shown in section in Fig. 4) fit to corresponding surface elements of the protrusion in the lampholder. Surface portions are formed on the plastic cap 2 and the plastic shell 3 along their common outer peripheral region in order to make and keep a snapped-in fixing joint 4 connecting the plastic cap 2 and the plastic shell 3. These surface portions can be combined with at least one stepped surface to increase torsional strengh. According to the invention, the plastic cap 2 and the plastic shell 3 are also fixed to each other with a further fixing joint 5 in the inner space of the base 1, preferably in the vicinity of the central axis 0 of the plastic base 1, in addition to the fixing joint 4 made along the common outer peripheral region of the cap 2 and the shell 3.

In the embodiment shown only as an example in the drawing, the further fixing joint 5 between the plastic cap 2 and the plastic shell 3 is made between two parts: one of them is an extension 20 of the plastic cap 2, which has at least approximately the shape of an annular cylinder coaxial with the central axis 0, and protrudes into the inner space of the base 1 towards the hollow 30; and the other is a protrusion 36 protruding from the bottom plate 35 of the hollow 30. The protrusion 36 is made of the same material as the plastic shell 3 and is fitted to the extension 20 of the plastic cap 2. In the embodiment shown in the example, the protrusion 36 consists of two wall portions 37, 38 having the shape of segments of an annular cylinder and being opposite to each other. The two wall portions 37, 38 fit to the inner diameter of the extension 20 of the plastic cap 2 along their outer mantle portions. The protrusion 36 may consist of more than two wall postions.

As stepped surfaces, a slot 39 is formed parallel to the central axis 0 in one of the wall portions 38 of the protrusion 36 and a rib 21 is formed on the extension 20 ensuring a further joint 5 between the cap 2 and the shell 3 in order to increase torsional strength. The rib 21 protrudes inwardly in radial direction from the inner mantle surface of the extension 20 and penetrates into the slot 39. The wall portions 37, 38 have the shape of segments of an annular cylinder. As an alternative solution, the rib 21 may also penetrate the gap between the wall portions 37, 38.

The extension 20 and the protrusion 36 ensuring a further joint 5 between the cap 2 and the shell 3 may be fixed to each other (not shown in the drawing) using a surface elements snapping resiliently one into the other. In addition to this, the cap 2 and the shell 3 may also be fixed to each other with plastic welding or an adhesive bond.

## Claims

1. Base for compact fluorescent lamp comprising
a plastic cap (2) being a hollow body and holding a discharge tube (6) firmly;
a plastic shell (3) being fixed to said plastic cap (2) and including components for releasable mechanical and electrical connection between said lamp and a lampholder being formed in an outside operating unit or in an assembly containing such an operating unit;
metal parts being embedded into said plastic shell (3) and being suitable for electrical connection to electrical contacts of said lampholder;
said plastic shell (3) including wall portions having surface elements suitable for positioning said lamp and providing releasable mechanical connection with corresponding surface elements of said lampholder;
said wall portions bordering a hollow (30) being sunk into said base (1) and surrounding an inner space portion around a central axis (0);
said plastic cap (2) and plastic shell (3) having a common outer peripheral region including fitted surface portions being fixed (4) to each other; wherein
said plastic cap (2) and plastic shell (3) are fixed to each other with at least one further fixing joint (5) in the inner space (10) of said base (1).

2. Base for compact fluorescent lamp of claim 1 wherein said further fixing joint (5) is made between an extension (20) and a protrusion (36) being formed on said plastic cap (2) and said plastic shell (3), respectively.

3. Base for compact fluorescent lamp of claim 2 wherein said extension (20) of said plastic cap (2) has at least approximately the shape of an annular cylinder being coaxial with said central axis (0) and protrudes into said inner space (10) of said base (1) towards said hollow (30); and said protrusion (36) having a cylindrical outer mantle and being of the same material as the said plastic shell (3) protrudes from the bottom plate (35) of said hollow (30) and is fitted to said extension (20) of said plastic cap (2).

4. Base for compact fluorescent lamp of claim 2 wherein said protrusion (36) of said plastic shell (3) includes at least two wall portions (37, 38) having the shape of segments of an annular cylinder and said wall portions (37, 38) are fitted to the inner diameter of said extension (20) along their outer mantle surfaces.

5. Base for compact fluorescent lamp of claim 4 wherein said protrusion (36) is formed by two wall portions (37, 38) being opposite to each other.

6. Base for compact fluorescent lamp of claim 2 wherein at least one stepped surface is formed on said extension (20) and said protrusion (36) to increase torsional strength of said base (1).

7. Base for compact fluorescent lamp of claim 4 wherein a rib (21) being formed in the inner mantle surface of said extension (20) penetrates into a slot (39) being formed parallel to said central axis (0) in at least one said wall portion (38) having the shape of a segment of an annular cylinder or into a gap between two wall portions (37, 38).

8. Base for compact fluorescent lamp of claim 1 wherein said fitted surface portions making a fixing joint (4) along said common outer peripheral region of said plastic cap (2) and plastic shell (3) are combined with at least one stepped surface to increase torsional strength.

9. Base for compact fluorescent lamp of claim 2 wherein said further fixing joint (5) is made by surface elements being formed on said extension (20) and said protrusion (36), respectively and being snapped one into the other.

10. Base for compact fluorescent lamp of claim 9 wherein said extension (20) and said protrusion (36) are also fixed to each other by means of plastic welding or an adhesive bond.
